# EUROPÄISCHE PATENTSCHRIFT

(11) **EP 3 358 494 B1**
(45) Veröffentlichungstag und Bekanntmachung des Hinweises auf die Patenterteilung: **27.11.2019**
(21) Anmeldenummer: 18154860.3
(22) Anmeldetag: 02.02.2018
(51) Int. Cl.: G06K 19/077, G06K 7/10

(54) **RFID-LESESTATION**
RFID READ STATION
STATION DE LECTURE RFID

(30) Priorität: 02.02.2017 DE 202017100566 U
(43) Veröffentlichungstag der Anmeldung: 08.08.2018
(73) Patentinhaber: ASTRA Gesellschaft für Asset Management mbH & Co. KG, 30890 Barsinghausen (DE)
(72) Erfinder: Maaß, Norman, 30455 Hannover (DE); Stobbe, Anatoli, 30890 Barsinghausen (DE)
(74) Vertreter: Patentanwälte Thömen & Körner

(56) Entgegenhaltungen:
- WO-A1-2009/002156
- DE-U1-202016 100 672
- US-A1- 2006 170 556
- US-A1- 2009 101 713

## Beschreibung

Die Erfindung betrifft ein RFID-System aus einer Lesestation und wenigstens einem RFID-Transponder nach dem Oberbegriff des Anspruchs 1.

Um den Lagerbestand von mit RFID-Transponder versehenen Gegenständen zu erfassen, werden die RFID-Transponder mittels einer RFID-Lesestation gelesen, wenn sie in das Lager verbracht oder aus dem Lager entnommen werden. Dabei werden die Gegenstände üblicherweise in einer Vielzahl im dreistelligen Bereich im Transportwagen verladen und mit dem Transportwagen dann gemeinsam ins Lager gefahren. Bei der Entnahme der Gegenstände aus dem Lager werden die Gegenstände zumeist in geringer einstelliger Stückzahl mittels eines gesonderten RFID-Lesegeräts und eines Berechtigungsausweises jeweils einer bestimmten Person zugeordnet. Es ist aber auch möglich, dass größere Stückzahlen der Gegenstände an andere Orte verlegt werden und zu diesem Zweck ebenfalls in einer Vielzahl in Transportwagen verladen und mit dem Transportwagen dann gemeinsam aus dem Lager gefahren werden.

Das Lesen einer großen Stückzahl von RFID-Transpondern erfordert ein Zeitfenster, in dem eine Kommunikation zwischen den RFID-Transpondern und dem Lesegerät oder mehreren Lesegeräten der Lesestation aufrechterhalten werden muss, da die Daten der RFID-Transponder zeitlich nacheinander gelesen werden und bei Datenkollisionen die Lesevorgänge wiederholt werden müssen. Bei einer Vielzahl von in einem Transportwagen befindlichen und zusammen mit dem Transportwagen bewegten Gegenständen mit RFID-Transpondern besteht daher das Risiko, dass der Transportwagen das Lesefeld der zur Lesestation gehörenden Lesegeräte verlässt, ehe alle RFID-Transponder gelesen sind.

Aus der US 2006/0170556 A1 ist ein System zum Lesen von RFID-Transpondern bekannt, das einen Tunnel mit einem Antennensystem umfasst, durch den die mit RFID-Transpondern ausgestatteten Gegenstände passieren, wobei die Arbeitsfrequenz des Systems kleiner als die durch die geometrischen Abmessungen des Tunnels vorgegebene Grenzfrequenz ist und wobei der Tunnel auf seiner Innenfläche einen Mikrowellenabsorber trägt und an seiner Außenfläche mit Metall ummantelt ist. Dadurch soll eine reflexionsfreie Erzeugung eines elektromagnetischen Lesefeldes im Inneren des Tunnels und eine Dämpfung nach außen hin sichergestellt werden.

Der Erfindung liegt die Aufgabe zugrunde, ein RFID-System aus einer Lesestation und RFID-Transpondern, die sich an auf Transportwagen befindlichen Gegenständen befinden, so auszugestalten, dass alle RFID-Transponder gelesen werden können, ehe der Transportwagen das Lesefeld verlässt.

Diese Aufgabe wird bei einem RFID-Sytem nach dem Oberbegriff des Anspruchs 1 durch die Merkmale dieses Anspruchs gelöst.

Weiterbildungen und vorteilhafte Ausgestaltungen ergeben sich aus den Unteransprüchen.

Die einen Korridor umfassende Lesestation ermöglicht durch die mit elektromagnetischen Feldreflektoren ausgestatteten Seitenwände ein Streuen des elektromagnetischen Lesefeldes durch mehrfache Reflexionen in der Art, dass überall innerhalb des Korridors eine ausreichende Feldstärke zum Betrieb der RFID-Transponder und zum Lesen ihrer Daten herrscht. Außerhalb des Korridors dagegen ist die Feldstärke geringer, wodurch Störungen, z. B. durch das unerwünschte Lesen von außerhalb des Korridors befindlichen RFID-Transpondern vermieden werden. Ebenso werden unerwünschte Störungen anderer im gleichen Frequenzbereich arbeitender Geräte vermieden. Umgekehrt wird auch das Eindringen von aus fremden Quellen stammender elektromagnetischer Energie in das Innere des Korridors reduziert.

Die elektromagnetischen Feldreflektoren können unterbrochene oder durchgehende elektrisch leitfähige Flächen sein und Metall oder Kohlenstoff oder elektrisch leitfähige Polymere enthalten.

Die Materialien können je nach gewünschter Leitfähigkeit eingesetzt werden. Während Metalle die größte Leitfähigkeit und die geringsten Verluste bei der Reflexion aufweisen, ist die Leitfähigkeit bei Kohlenstoff und Polymeren geringer. Die Verluste bei der Reflexion sind größer, denn die elektromagnetische Energie wird teilweise absorbiert.

Die elektromagnetischen Feldreflektoren können in die Wände integriert oder als gesondert aufgebrachte Schicht oder als Folie ausgeführt sein.

Je nach Stückzahl und Fertigungsverfahren können die Wände komplett mit leitfähigen Eigenschaften bei der Herstellung oder erst nachträglich versehen werden.

Außerdem können die elektromagnetischen Feldreflektoren nicht transparent oder transparent sein, wobei eine transparente Variante durch eine sehr dünne oder eine unterbrochene, gerasterte Schicht oder Folie ausgeführt sein kann.

Während nicht transparente elektromagnetische Feldreflektoren einfach durch eine Metallplatte oder -folie realisiert werden können, ist bei sowohl leitfähigen als auch transparenten elektromagnetischen Feldreflektoren ein Kompromiß zwischen Leitfähigkeit und Transparenz nötig.

Der abknickende Verlauf des Korridors führt zu einer weiteren Streuung des elektromagnetischen Feldes durch Reflexionen des unter unterschiedlichen Winkeln auf die Feldreflektoren auftretenden elektromagnetischen Felder und sorgt für eine noch bessere Versorgung des Innenraums des Korridors mit elektromagnetischer Energie, um die durch den Korridor transportierten RFID-Transponder mit Betriebsenergie zu versorgen, so dass diese ihre Daten zuverlässig aussenden und dem Lesegerät übermitteln können.

Die Länge des Korridors führt beim Durchfahren mit einem Transportwagen, der mit einer Vielzahl von mit RFID-Transpondern ausgestatteten Gegenständen beladen ist, bereits für sich zu einer längeren Verweildauer der RFID-Transponder im elektromagnetischen Feld, als es ein Lesegerät mit ausschließlich einer Richtantenne könnte, da diese für sich nur einen sehr begrenzten Bereich abdeckt. Durch das zusätzliche Abknicken der Seitenwände des Korridors wird die Verweildauer der RFID-Transponder im elektromagnetischen Lesefeld nochmals erhöht, da der Lagerist zwangsläufig die Geschwindigkeit des Transportwagens verringern oder ihn sogar kurzzeitig zum Stehen bringen muss, um ihn in die neue Richtung zu lenken und weiter zu schieben. Es handelt sich hierbei also um eine durch die Bauform vorgegebene Schikane auf den Transportweg durch den Korridor. Sofern der Transportwagen zum Einschlagen in die neue Fahrtrichtung gedreht werden muss, da sein Fahrwerk keine Diagonal- oder Querbewegung zulässt, werden die RFID-Transponder bei diesem Vorgang zwangsläufig mitgedreht. Sind die Antennen der RFID-Transponder für eine waagerechte Polarisation ausgerichtet, so wird durch diese Drehung auch die Ausrichtung der Antennen der RFID-Transponder zur Ausbreitungsrichtung des elektromagnetischen Feldes verändert. Bei einer vorher eventuell ungünstigen Ausrichtung der Antennen der RFID-Transponder zur Ausbreitungsrichtung des elektromagnetischen Feldes im Korridor am jeweiligen Ort der Antennen besteht dann eine erhöhte Wahrscheinlichkeit, dass eine günstigere Ausrichtung der Antennen der RFID-Transponder erreicht wird und somit die Kommunikation zwischen den RFID-Transpondern und den Lesegeräten insgesamt sicherer wird.

Die konstruktive Ausgestaltung des Korridors der Lesestation führt also zu einem Synergieeffekt, in dem erstens durch Reflexionen dafür gesorgt wird, dass eine weitgehend gleichmäßige Feldstärke im Inneren des Korridors erzielt wird, zweitens durch die Länge des Korridors und das Abknicken der Wände eine Fahrtrichtungsänderung erzwungen wird, die zu einer verlängerten Verweildauer der RFID-Transponder im Korridor beiträgt und drittens durch das Drehen des Transportwagens die Ausrichtung der Antennen verändert wird, so dass vorher ungünstig zur Feldausbreitung ausgerichtete Antennen während des restlichen Aufenthalts im Korridor mit hoher Wahrscheinlichkeit eine günstigere Ausrichtung erhalten.

Bei einer bevorzugten Ausführung knicken die Seitenwände nach einem ersten Verlauf entlang des Korridors einmal unter einem Winkel von 90° ab und werden als zweiter Verlauf entlang des Korridors fortgesetzt.

Dieser Ausführung ist konstruktiv einfach realisierbar und auch an Räume mit üblicherweise senkrecht zueinanderstehenden Seitenwänden angepasst, dass sie wenig nicht nutzbaren Totraum schafft. Außerdem führt das Abknicken um 90° zu mehrfachen Reflexionen des von der Antenne des Lesegerätes abgestrahlten Lesefeldes. Ein weiterer Vorteil ist die bei dieser Richtungsänderung erzielte maximale Verweildauer durch die Notwendigkeit, den Transportwagen abzubremsen und anschließend in eine Querrichtung umzulenken und weiterzuschieben, ohne dass diese Richtungsänderung so übertrieben ist, dass Proteste der Lageristen zu erwarten sind. Noch ein Vorteil ist, dass der Lagerist nicht dazu gezwungen wird, anzuhalten oder den Transportwagen in eine Sackgasse oder geschlossene Lesestation, nur zum Erfassen der Transponder, schieben zu müssen. Die Inventarisierung erfolgt durch die erfindungsgemäße Konstruktion "en passant" und erhöht so die Akzeptanz der Lesestation.

Bei einer Weiterbildung knicken die Seitenwände zusätzlich ein weiteres Mal unter einem Winkel von 90° ab, der gegensinnig zur ersten Abknickung weist, derart, dass ein Dritter Verlauf entlang des Korridors parallel aber versetzt zum ersten Verlauf ausgerichtet ist.

Da der Lagerist bei dieser Weiterbildung gezwungen ist, zweimal kurz hintereinander den Transportwagen abzubremsen und in die zu vorherigen Fahrtrichtung weisende Querrichtung umzulenken, ergibt sich eine noch längere Verweildauer des Transportwagens mit den mit RFID-Transponder ausgestatteten Gegenständen im Korridor. Da die Zuverlässigkeit des richtigen Lesens der Daten aller RFID-Transponder abhängig von der Zeit ist, die zum Lesen und bei Kollision zur Kollisionsauflösung gleichzeitig sendender RFID-Transponder zur Verfügung steht, trägt diese Weiterbildung dazu bei, das Risiko nicht erkannter und ungelesener RFID-Transponder deutlich zu verringern oder auszuschließen.

Das wenigstens eine Lesegerät kann eine Richtantenne aufweisen, deren Hauptstrahlrichtung in das Innere des Korridors und unter einem von der Senkrechten abweichen Winkel auf eine Reflektorebene der elektromagnetischen Feldreflektoren ausgerichtet ist.

Dadurch wird das elektromagnetische Lesefeld gezielt auf das Innere des Korridors gerichtet und beschränkt. Durch die Ausrichtung der Hauptstrahlrichtung in einem von der Senkrechten abweichenden Winkel auf eine Reflektorebene wird eine mehrfache Reflexion an den Wänden und dabei gleichzeitg eine Ausbreitung des elektromagnetischen Feldes von der Antenne des Lesegerätes entlang des gesamten Inneren des Korridors erzielt. Außerdem wird auch eine hochfrequente Ausleuchtung des Bereichs des Korridors ermöglicht, der wegen der Abknickung nicht im direkten Sichtfeld der Antenne liegt.

Das wenigstens eine Lesegerät kann auch eine Patch-Antennenanordnung aufweisen, die gemeinsam mit den Feldreflektoren auf den Längswänden angeordnet ist oder in die Längswände integriert ist.

Eine Patch-Antennenanordnung besteht aus einer Mehrzahl planer Strahlerflächen, deren Kantenlänge auf ein ganzzahliges Vielfaches der Wellenlänge des elektromagnetischen Feldes bemessen ist. Wegen der planen Bauart ist sie besonders geeignet, in die Seitenwände integriert zu werden. Um eine Abstrahlung nach außerhalb des Korridors zu verhindern, kann die Abschirmung auf der Außenseite angeordnet werden und die Strahlerflächen der Patch-Antennenanordnung durch einen von der Wandstärke vorgegebenen Abstand auf der Innenseite. Die dazwischenliegende Wand muss aus einem elektrisch nichtleitenden Material bestehen. Die Abschirmung wirkt dann als Reflektor, so dass die Antennenanordnung unter Antennengewinn in das Innere des Korridors abstrahlen kann. Besteht die Patch-Antennenanordnung aus mehreren Strahlerflächen, so kann durch phasenverschobene Ansteuerung auch eine Abstrahlung unter einem von der Senkrechten zur Reflektorebene abweichenden Winkel erzielt werden

Vorzugsweise sind ein oder mehrere weitere Lesegeräte im Verlauf des Korridors angeordnet und zueinander entlang der Längsachse des Korridors versetzt.

Da die Feldstärke des elektromagnetischen Feldes mit dem Abstand von der Antenne des Lesegerätes abnimmt und im Falle von Reflexionen an den Seitenwänden bei jeder Reflexion zusätzlich gedämpft wird und ohnehin auch der zurückgelegte Weg bis zum anderen Ende des Korridors größer als der direkte Weg ist, kann die Feldstärke eventuell für eine Energieversorgung der RFID-Transponder am anderen Ende des Korridors nicht ausreichend sein. Durch die Anordnung weiterer Lesegeräte im Verlauf des Korridors kann die bei einer einzigen Antenne abnehmende Lesefeldstärke ausgeglichen werden.

Bei einer Ausführungsform der Erfindung sind wenigstens die Seitenwände oder Teile der Seitenwände des Korridors transparent.

Da durch die transparenten Teile der Wände der umgebende Raum sichtbar bleibt, wird zu Klaustrophobie neigenden Personen das Passieren des Korridors erleichtert.

Bei einer weiteren Ausführung können die Seitenwände oder Teile der Seitenwände, die dem Eingang und Ausgang des Korridors gegenüberliegen, intransparent sein.

Diese Maßnahme verhindert, dass Lageristen die Existenz der Seitenwände an der Abknickung nicht rechtzeitig wahrnehmen und den Transportwagen nicht rechtzeitig abbremsen und mit den Seitenwänden kollidieren lassen.

Außerdem kann entlang der Seitenwände innen ein Handlauf oder eine Abstandsschiene angeordnet sein.

Diese Maßnahme sorgt dafür, dass eine drohende Kollision des Transportwagens mit den Seitenwänden rechtzeitig vor dem Zusammenprall verhindert wird. Dabei geht es nicht nur darum, Beschädigungen der Seitenwände zu vermeiden, sondern auch darum, die im Transportwagen befindlichen und den Seitenwänden benachbarten RFID-Transponder auf Abstand von der Reflektorebene zu halten, damit sie elektromagnetische Energie zur eigenen Versorgung und Aussendung der Daten aus dem elektromagnetischen Feld im Korridor aufnehmen können. Bei zu starker Annäherung an leitende Flächen wird das Feld nämlich so verzerrt, dass nicht mehr genügend Energie von den Antennen der RFID-Transponder aufgenommen werden kann.

Bei einer weiteren Ausführung sind am Eingang und Ausgang des Korridors Ausweisleser und Zutrittsampeln angeordnet und die Ausweisleser und Zutrittsampeln sind zusammen mit den Lesegeräten im oder am Korridor mit einem gemeinsamen Steuerrechner verbunden oder gekoppelt.

Diese Maßnahme dient der Zutrittskontrolle des Lagers durch die Lageristen und der Identifizierung der zugangsberechtigten Lageristen. Außerdem kann nach Betätigen des Ausweislesers ein zuvor im Stand-by-Modus mit verringerter Energieaufnahme befindliches Lesegerät für den Korridor in den Betriebsmodus geschaltet werden. Auch eine Begegnung von Transportwagen, die gleichzeitig von entgegengesetzten Seiten in den Korridor hineinfahren, wird dadurch vermieden.

Auf der dem Lager zugewandten Seite und vom Korridor örtlich abgesetzt kann zusätzlich ein mit einem Ausweisleser kombiniertes Lesegerät angeordnet sein, das ebenfalls Bestandteil der Lesestation ist. Dieses Lesegerät dient zur Zuordnung entnommener Gegenstände zu Benutzern und ist gemeinsam mit dem weiteren Ausweisleser ebenfalls mit dem gemeinsamen Steuerrechner verbunden oder gekoppelt.

Durch das mit dem Ausweisleser kombinierte Lesegerät werden die von einem Benutzer aus dem Lager entnommenen Gegenstände diesem Benutzer zugeordnet. Da durch die Kombination das Lesen des Ausweises des Benutzers und das Lesen der RFID-Transponder der für den Benutzer bestimmten Gegenstände zeitgleich oder in kurzen Zeitabständen erfolgt, ist eine eindeutige Zuordnung dieser Gegenstände zu Benutzern möglich. Die Ausweisleser an Eingang und Ausgang des Korridors in Verbindung mit den Lesegeräten im Inneren des Korridors könnten die Aufgabe auch erfüllen, die Zuordnung der Gegenstände zu Benutzern vorzunehmen. Hier besteht aber der Nachteil, dass bei gleichzeitig mehreren Benutzern zu viel Wartezeit vergeht, bis einer den Korridor verlassen hat und der nächste an der Reihe ist, sich auszuweisen und den Korridor zu passieren.

Außerdem kann durch das mit dem Ausweisleser kombinierte Lesegerät bei der Entnahme von Gegenständen aus dem Lager leichter unterschieden werden, ob sie zu Zwecke der Benutzung entnommen werden oder zum Zwecke der Verlegung an einen anderen Ort. Während das dem Korridor zugeordnete Lesegerät das Passieren einer Vielzahl von RFID-Transponder im dreistelligen Bereich zulässt, kann das mit dem Ausweisleser kombinierte Lesegerät die Einhaltung der Entnahme nur einer begrenzten Anzahl von Gegenständen einstelligen Bereich überwachen und Entnahmen über die begrenzte Anzahl hinaus blockieren.

Nachfolgend wird die Erfindung anhand eines Ausführungsbeispiels erläutert, das in der Zeichnung dargestellt ist. Darin zeigen:
- Fig. 1: einen schematischen Grundriss einer Lesestation im Zugang zu einem Lager mit einem einmalig unter einem rechten Winkel abknickenden Korridor und
- Fig. 2: einen vergrößerten, mehr detaillierten Grundriss des Korridors nach Fig. 1
- Fig. 3: einen Grundriss eines Korridors der Lesestation, der zweimal gegensinnig in einem rechten Winkel abknickt.

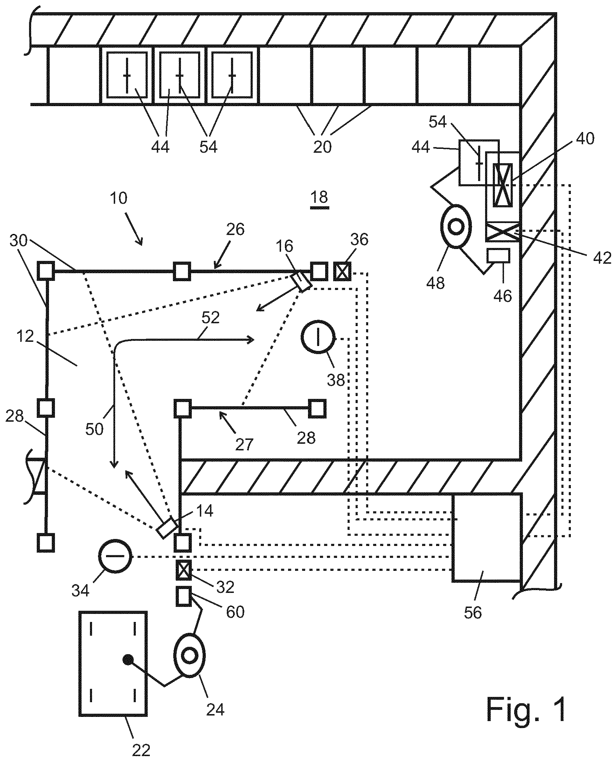

Die in Fig. 1 als schematischer Grundriss dargestellte Lesestation 10 umfasst einen Korridor 12, der durch eine Bodenfläche und zwei Längswände 26, 27 begrenzt ist. In diesem Grundriss nicht darstellbar ist eine optionale Deckenfläche, die den Korridor 12 oben begrenzt. Der Korridor 12 bildet einen Zugang zu und Ausgang von einem Lager 18 für Gegenstände 44, die mit RFID-Transpondern 54 ausgestattet sind. Dies können zum Beispiel Textilien sein, die vom Personal eines Krankenhauses nur für eine begrenzte Zeit getragen werden und anschließend gereinigt und im gereinigten Zustand wieder in das Lager zurückgebracht werden. Der RFID-Transponder 54 kann jeweils Eigenschaften der Textilien, wie Art, Konfektionsgröße, Anzahl der Reinigungsvorgänge speichern. Diese Angabe erleichtern eine gezielte Sortierung und Ordnung bei der Lagerung in Regalen, Fächern 20 oder Schränken, eine Verfolgung bei der Logistik und ermöglichen die Anzahl der Waschvorgänge bis zum Erreichen der maximalen Nutzungsdauer zu überwachen.

Während zur Bestückung des Lagers 18 die Gegenstände 44 in einer Vielzahl auf einem Transportwagen 22 ins Lager 18 gefahren werden, erfolgt die Entnahme in der Regel nur in Form von einigen Gegenständen 44, die einem Benutzer 48 zugeordnet werden. Es ist allerdings auch möglich, dass im Zuge einer Verlegung der Gegenstände 44 an einen anderen Ort auch eine Vielzahl von Gegenständen 44 auf einem Transportwagen 22 wieder aus dem Lager 18 herausgefahren werden.

Der Korridor 12 weist vom Eingang beginnend einem ersten geradlinigen Verlauf 50 auf, knickt etwa in der Mitte der Gesamtstrecke des Korridors 12 um 90° ab und führt in einem zweiten geradlinigen Verlauf 52 zum Ausgang. Am Eingang und Ausgang des Korridors 12 ist jeweils ein Lesegerät 14, 16 zum Lesen von RFID-Transpondern 54 angeordnet und die Lesegeräte 14, 16 sind mit einem Steuerrechner 56 verbunden. Die Antennen der Lesegeräte 14, 16 weisen in das Innere des Korridors 12 und die Hauptstrahlrichtung der Antennen ist jeweils unter einem Winkel von 45° auf die gegenüberliegende Seitenwand des Korridors 12 gerichtet. Die Seitenwände 26, 27 des Korridors 12 weisen elektromagnetische Feldreflektoren auf, die sich entlang der Achse des Korridors 12 vom Eingang zum Ausgang erstrecken. Auf diese Weise wird eine ausgewogene Verteilung des elektromagnetischen Lesefeldes im Inneren des Korridors 12 erreicht. Diese Feldreflektoren sind hier elektrisch leitfähige Folien, die einerseits das Innere des Korridors 12 nach außen abschirmen und andererseits elektromagnetische Wellen und -Felder bei ihrer Ausbreitung im Inneren des Korridors 12 reflektieren. Damit wird sichergestellt, dass im Korridor 12 keine größeren Bereiche mit so geringer Feldstärke existieren, dass RFID-Transponder 54 in diesem Bereich nicht die nötige Energie zu ihrem eigenen Betrieb erhalten daher nicht ihre Daten zum Lesegerät 14, 16 übertragen können.

Die Seitenwände 26, 27 sind bis auf Teile, der dem Eingang und Ausgang gegenüberliegt, mit transparenten Reflektorfolien 28 ausgestattet. Die dem Eingang und Ausgang der gegenüberliegenden Teile der Seitenwände 26, 27 sind hingegen mit nicht transparenten Reflektorfolien 30 ausgestattet.

Am Eingang und Ausgang des Korridors 12 sind jeweils ein Ausweisleser 32, 36 und eine Zutrittsampel 34, 38 angeordnet, die ebenfalls mit dem Steuerrechner 56 verbunden sind. Außerdem befindet sich auf der dem Lager 18 zugewandten Seite und abgesetzt vom Korridor 12 zusätzlich ein mit einem Ausweisleser 42 kombiniertes Lesegerät 40 für RFID-Transponder 54, das ebenfalls mit dem Steuerrechner 56 verbunden ist.

Zur Bestückung des Lagers 18 mit auf einem Transportwagen befindlichen Gegenständen 44 mit RFID-Transpondern 54 meldet sich ein Lagerist 24 mit einem Ausweis 60 am Ausweisleser 32 an und schiebt anschließend den Transportwagen 22 in den Korridor 12, sobald die Zutrittsampel 34 den Eingang freigibt. Voraussetzung für die Freigabe ist ein gültiger Ausweis 60 und ein freier Korridor 12.

Durch das in dem Korridor 12 herrschende Lesefeld werden die RFID-Transponder 54 der Gegenstände 44 veranlasst, ihre Daten zu senden. Bei einem beispielhaften Lesevorgang mit RFID-Transpondern und Lesegeräten im UHF-Bereich dauert das Lesen eines Transponders etwa zwischen 3 und 5 ms. Mit einem Transportwagen werden etwa sechshundert Gegenstände mit RFID-Transpondern gleichzeitig transportiert. Die theoretische Erfassungszeit wäre dann 3 Sekunden für alle RFID-Transponder. Durch Kollisionen, d. h. gleichzeitiges Senden mehrerer Transponder, kann aber ein mehrfacher Übertragungsversuch nötig sein, bis die Daten erfolgreich übertragen sind. Die reale Erfassungszeit ist somit länger.

Um die Erfassung aller RFID-Transponder 54 sicherzustellen, ist daher eine ausreichende Verweildauer des Transportwagens 22 im Korridor 12 nötig. Dies wird durch eine Schikane in Form der abknickenden Verläufe des Korridors 12 erreicht. Der Lagerist 24 kann also den Transportwagen 22 nicht einfach mit hoher Geschwindigkeit durch den Korridor 12 fahren, sondern muss ihn bei Erreichen der Abknickung abbremsen oder anhalten. Dann muss er die Fahrtrichtung ändern, in dem er bei einem nicht quer verfahrbaren Transportwagen 22 diesen um 90° dreht und anschließend weiterfährt und den Korridor 12 wieder verlässt. Aber auch bei einem quer verfahrbaren Transportwagen 22 müsste der Lagerist 24 seine Bewegungsrichtung um 90° ändern. In jedem Fall benötigt die Änderung der Fahrtrichtung Zeit, was im Interesse einer zuverlässigen Erfassung aller RFID-Transponder 54 ist.

Bei Abschluss der Einlagerung der Gegenstände 44 oder auch bei Verlassen des Korridors 12 hält der Lagerist 24 den Ausweis 60 an den anderen Ausweisleser 36, woraufhin der Korridor 12 für weitere Erfassungsvorgänge durch die Zutrittsampeln 34, 38 freigegeben wird.

Bei Verlegung von Gegenständen 44 mittels eines Transportwagens 22 vom Lager 18 zu einem anderen Ort erfolgen die vorgeschilderten Vorgänge in umgekehrter Richtung, wobei diesmal zuerst der auf der Lagerseite befindliche Ausweisleser 36 benutzt wird und die auf der Lagerseite befindliche Zutrittsampel 38 den Zutritt zu Korridor 12 freigibt.

Werden die im Lager 18 gelagerten Gegenstände 44 aus Fächern 20 zur Benutzung entnommen, erfolgt die Erfassung nicht durch die Lesegeräte im Korridor, sondern durch ein gesondertes im Lager 18 befindliches Lesegerät 40, das mit einem Ausweisleser 42 kombiniert ist. Der Nutzer 48 begibt sich mit den aus den Fächern 20 entnommenen Gegenständen 44 zum Lesegerät 40 und weist sich mit einem Ausweis 46 aus, der vom Ausweisleser 42 gelesen werden. Anschließend werden die entnommenen Gegenstände 44 durch das Lesegerät 40 registriert und mittels des Steuerrechners 56 dem jeweiligen Nutzer 48 persönlich zugeordnet. Dabei kann die Anzahl der gleichzeitig entnommenen Gegenstände begrenzt sein und Alarm ausgelöst werden, wenn der Nutzer 48 versucht, weitere Gegenstände auf sich zu registrieren. Anschließend kann er das Lager 18 durch den Korridor 12 verlassen, ohne dass dort eine erneute Registrierung der RFID-Transponder an den entnommenen Gegenständen vorgenommen wird.

Durch die Lesegeräte 14 und/oder 16 ist es ferner möglich zu überwachen, ob Gegenstände mit Transponder dem Lager entnommen werden, die nicht am Lesegerät 40 einem Benutzer 48 zugeordnet wurden. Diese unregistrierte Entnahme kann durch die Ampeln 34, 38 angezeigt werden. Trägt der Benutzer 48 Gegenstände 44 mit Transponder 54 die vorher auf ihn registriert wurden, könnte die Lesestation 10 sogar erkennen, wer unregistriert Gegenstände entnimmt.

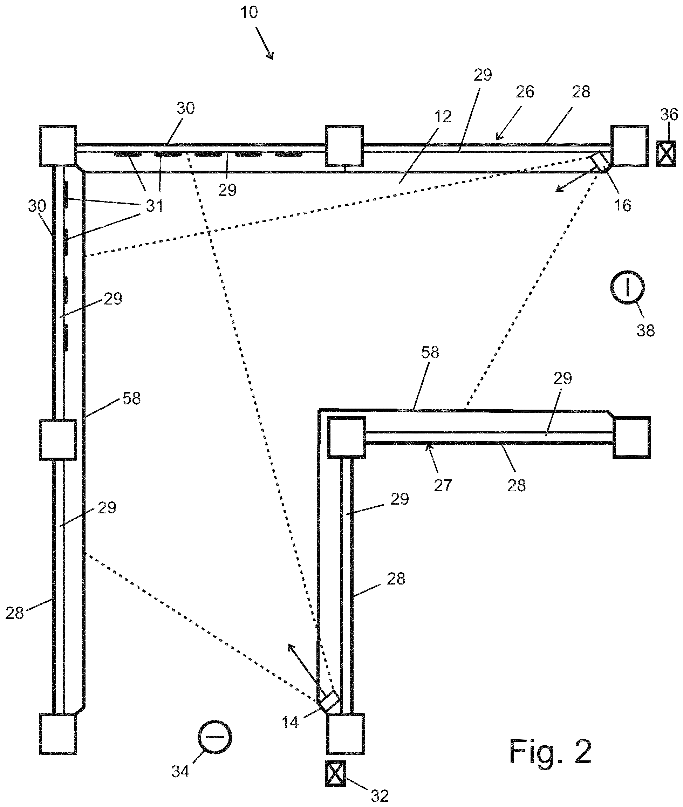

Fig. 2 zeigt einen vergrößerten, mehr detaillierten Grundriss des Korridors nach Fig. 1. Daraus ist ersichtlich, dass die Seitenwände aus Scheiben 29 bestehen, die außen mit transparenten Reflektorfolien 28 und nicht transparenten Reflektorfolien 30 versehen sind. Außerdem sind noch alternative Antennen für Lesegeräte dargestellt, zwei Patchantennenanordnungen mit Patches 31 auf den Innenseiten der Scheiben. Die nicht transparenten Reflektorfolien 30 sind hier gleichzeitig die Reflektoren der durch die Patches 31 gebildeten Strahlerelemente. An den Seitenwänden 26, 27 des Korridors 12 sind außerdem Handläufe 58 angeordnet, die einen Abstand von den Seitenwänden aufweisen.

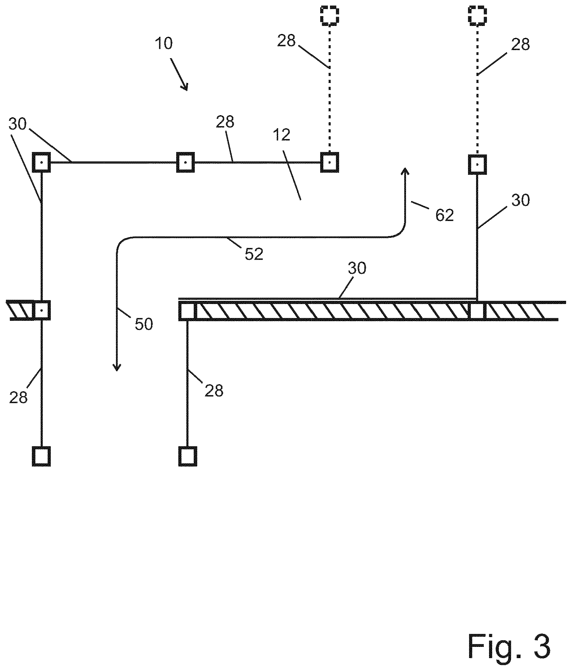

Fig. 3 zeigt einen Grundriss eines Korridors 12 der Lesestation, der zweimal gegensinnig in einem rechten Winkel abgeknickt ist. Da der Korridor 12 gegenüber der Ausführung nach Fig. 1 länger und einmal mehr abgeknickt ist, wird eine weitere Erhöhung der Verweildauer eines Transportwagens mit Gegenständen, die RFID-Transponder tragen, im Korridor erreicht. Statt eines Eingangs oder Ausgangs rechts oben in der Seitenwand kann auch noch ein weiteres Korridorsegment angeschlossen sein, wie die gestrichelte Darstellung andeutet. Es ist neben den aus Fig.1 und Fig. 2 entnehmbaren Verläufen 50, 52 des Korridors 12 noch ein dritter Verlauf 62 dargestellt.

Hinsichtlich der weiteren Ausstattung entspricht der Korridor nach Fig. 2 dem Korridor nach Fig. 1, weshalb auf diese Figur die gleichen Bezugszeichenbezeichnungen zutreffen. Wegen der größeren Länge kann es allerdings erforderlich sein, noch ein oder zwei weitere Lesegeräte im Inneren anzuordnen.

**Bezugszeichenliste**

| | | | |
|---|---|---|---|
| 10 | Lesestation | 44 | Gegenstand |
| 12 | Korridor | 46 | Ausweis |
| 14 | Lesegerät | 48 | Benutzer |
| 16 | Lesegerät | 50 | erster Verlauf |
| 18 | Lager | 52 | zweiter Verlauf |
| 20 | Fächer | 54 | RFID-Transponder |
| 22 | Transportwagen | 56 | Steuerrechner |
| 24 | Lagerist | 58 | Handlauf |
| 26 | Seitenwand | 60 | Ausweis |
| 27 | Seitenwand | 62 | dritter Verlauf |
| 28 | transparente Reflektorfolie | | |
| 29 | Scheibe | | |
| 30 | nicht transparente Reflektorfolie | | |
| 31 | Patch | | |
| 32 | Ausweisleser | | |
| 34 | Zutrittsampel | | |
| 36 | Ausweisleser | | |
| 38 | Zutrittsampel | | |
| 40 | Lesegerät | | |
| 42 | Ausweisleser | | |

## Patentansprüche

1. RFID-System aus einer Lesestation (10) und wenigstens einem RFID-Transponder (54), wobei die Lesestation (10) aus einem durch eine Bodenfläche, wenigstens zwei Seitenlängswände und optional eine Deckenfläche begrenzten Korridor (12) und aus wenigstens einem Lesegerät (14) besteht, das im oder am Korridor (12) angeordnet ist und das im Inneren des Korridors (12) ein elektromagnetisches Lesefeld erzeugt, **dadurch gekennzeichnet, dass** die Seitenlängswände (26, 27) elektromagnetische Feldreflektoren aufweisen, wodurch ein Streuen des elektromagnetischen Lesefeldes durch mehrfache Reflexionen in der Art auftritt, dass überall innerhalb des Korridors (12) eine ausreichende Feldstärke zum Betrieb der RFID-Transponder (54) und zum Lesen ihrer Daten herrscht, und dass die Seitenlängswände (26,27) entlang einer Achse des Korridors (12) wenigstens einmal in ihrem Verlauf (50; 52) entlang des Korridors (12) unter einem von 0° abweichenden Winkel abknicken.

2. RFID-System nach Anspruch 1, **dadurch gekennzeichnet, dass** die elektromagnetischen Feldreflektoren unterbrochene oder durchgehende elektrisch leitfähige Flächen sind, die Metall oder Kohlenstoff oder elektrisch leitfähigen Polymere umfassen.

3. RFID-System nach Anspruch 1 oder 2, **dadurch gekennzeichnet, dass** die elektromagnetischen Feldreflektoren in die Wände (26, 27) integriert oder als gesondert aufgebrachte Schicht oder als Folie ausgeführt sind.

4. RFID-System nach einem der Ansprüche 1 bis 3, **dadurch gekennzeichnet, dass** die elektromagnetischen Feldreflektoren transparent durch eine sehr dünne oder eine unterbrochene, gerasterte Schicht oder Folie ausgeführt sind.

5. RFID-System nach einem der Ansprüche 1 bis 4, **dadurch gekennzeichnet, dass** die Seitenwände nach einem ersten Verlauf (50) entlang des Korridors (12) einmal unter einem Winkel von 90° abknicken und als zweiter Verlauf (52) entlang des Korridors (12) fortgesetzt werden.

6. RFID-System nach Anspruch 5, **dadurch gekennzeichnet, dass** die Seitenwände (26, 27) zusätzlich ein weiteres Mal unter einem Winkel von 90° abknicken, der gegensinnig zur ersten Abknickung weist, derart, dass ein Dritter Verlauf (62) entlang des Korridors (12) parallel aber versetzt zum ersten Verlauf (50) ausgerichtet ist.

7. RFID-System nach einem der Ansprüche 1 bis 6, **dadurch gekennzeichnet, dass** das wenigstens eine Lesegerät (14) eine Richtantenne aufweist und die Hauptstrahlrichtung der Richtantenne in das Innere des Korridors (12) und unter einem von der Senkrechten abweichen Winkel auf eine Reflektorebene der elektromagnetischen Feldreflektoren ausgerichtet ist.

8. RFID-System nach einem der Ansprüche 1 bis 7, **dadurch gekennzeichnet, dass** das wenigstens eine Lesegerät (14) eine Patchantennenanordnung (31) aufweist, die gemeinsam mit den Feldreflektoren auf den Seitenwänden (26, 27) angeordnet ist oder in die Seitenwände (26, 27) integriert ist.

9. RFID-System nach einem der Ansprüche 1 bis 8, **dadurch gekennzeichnet, dass** ein oder mehrere weitere Lesegeräte (16, 40) im Verlauf des Korridors (12) angeordnet sind und zueinander entlang der Achse des Korridors (12) versetzt sind.

10. RFID-System nach einem der Ansprüche 1 bis 9, **dadurch gekennzeichnet, dass** wenigstens die Seitenwände (26, 27) oder Teile der Seitenwände (26, 27) des Korridors (12) transparent sind.

11. RFID-System nach einem der Ansprüche 1 bis 10, **dadurch gekennzeichnet, dass** die Seitenwände (26, 27) oder Teile der Seitenwände (26, 27), die dem Eingang und Ausgang des Korridors (12) gegenüberliegen, intransparent sind.

12. RFID-System nach einem der Ansprüche 1 bis 11, **dadurch gekennzeichnet, dass** entlang der Seitenwände (26, 27) innen ein Handlauf (58) oder eine Abstandsschiene angeordnet ist.

13. RFID-System nach einem der Ansprüche 1 bis 12, **dadurch gekennzeichnet, dass** am Eingang und Ausgang des Korridors (12) Ausweisleser (32, 36) und Zutrittsampeln (34, 38) angeordnet sind, und die Ausweisleser (32, 36) und Zutrittsampeln (34, 38) zusammen mit den RFID-Lesegeräten (14, 16) im oder am Korridor (12) mit einem gemeinsamen Steuerrechner (56) verbunden oder gekoppelt sind.

14. RFID-System nach einem der Ansprüche 1 bis 13, **dadurch gekennzeichnet, dass** auf der dem Lager (18) zugewandten Seite und außerhalb des Korridors (12) zusätzlich ein mit einem Ausweisleser (42) kombiniertes Lesegerät (40) angeordnet ist, das zur Zuordnung entnommener Gegenstände (44) zu Benutzern (48) vorgesehen ist und dieses zusätzliche mit dem Ausweisleser (42) kombinierte Lesegerät (40) ebenfalls mit dem gemeinsamen Steuerrechner (56) verbunden oder gekoppelt ist.

## Claims

1. RFID system comprising a reading station (10) and at least one RFID transponder (54), wherein the reading station (10) consists of a corridor (12) bounded by a floor area, at least two longitudinal side walls and optionally a ceiling area and of at least one reader (14), which is arranged in or on the corridor (12) and which generates an electromagnetic reading field inside the corridor (12), **characterized in that** the longitudinal side walls (26, 27) have electromagnetic field reflectors, as a result of which scattering of the electromagnetic reading field occurs by means of multiple reflections such that there is an adequate field strength everywhere within the corridor (12) for operating the RFID transponders (54) and for reading their data, and **in that** the course (50; 52) of the longitudinal side walls (26, 27) along the corridor (12) bends at least once at a non-0º angle along an axis of the corridor (12).

2. RFID system according to Claim 1, **characterized in that** the electromagnetic field reflectors are broken or continuous electrically conductive areas comprising metal or carbon or electrically conductive polymers.

3. RFID system according to Claim 1 or 2, **characterized in that** the electromagnetic field reflectors are integrated in the walls (26, 27) or embodied as a separately applied layer or as a film.

4. RFID system according to one of Claims 1 to 3, **characterized in that** the electromagnetic field reflectors are embodied in transparent fashion by means of a very thin or a broken, screened layer or film.

5. RFID system according to one of Claims 1 to 4, **characterized in that** the side walls bend once at an angle of 90º after a first course (50) along the corridor (12) and are continued as a second course (52) along the corridor (12).

6. RFID system according to Claim 5, **characterized in that** the side walls (26, 27) additionally bend a further time at an angle of 90º, which points in the opposite direction to the first bend, such that a third course (62) along the corridor (12) is oriented parallel to but offset from the first course (50).

7. RFID system according to one of Claims 1 to 6, **characterized in that** the at least one reader (14) has a directional antenna and the main beam direction of the directional antenna is oriented into the inside of the corridor (12) and at a nonorthogonal angle onto a reflector plane of the electromagnetic field reflectors.

8. RFID system according to one of Claims 1 to 7, **characterized in that** the at least one reader (14) has a patch antenna arrangement (31) that, together with the field reflectors, is arranged on the side walls (26, 27) or is integrated in the side walls (26, 27).

9. RFID system according to one of Claims 1 to 8, **characterized in that** one or more further readers (16, 40) are arranged over the course of the corridor (12) and are offset from one another along the axis of the corridor (12).

10. RFID system according to one of Claims 1 to 9, **characterized in that** at least the side walls (26, 27) or parts of the side walls (26, 27) of the corridor (12) are transparent.

11. RFID system according to one of Claims 1 to 10, **characterized in that** the side walls (26, 27) or parts of the side walls (26, 27) that are opposite the entrance and exit of the corridor (12) are nontransparent.

12. RFID system according to one of Claims 1 to 11, **characterized in that** a handrail (58) or a spacer rail is arranged along the inside of the side walls (26, 27) .

13. RFID system according to one of Claims 1 to 12, **characterized in that** identity card readers (32, 36) and access lights (34, 38) are arranged at the entrance and exit of the corridor (12), and the identity card readers (32, 36) and access lights (34, 38), together with the RFID readers (14, 16) in or on the corridor (12), are connected or coupled to a common control computer (56).

14. RFID system according to one of Claims 1 to 13, **characterized in that** on the side toward the store (18), and outside the corridor (12), there is additionally arranged a reader (40), combined with an identity card reader (42), that is intended to associate removed items (44) with users (48), and this additional reader (40) combined with the identity card reader (42) is likewise connected or coupled to the common control computer (56).

## Revendications

1. Système RFID constitué d'une station de lecture (10) et d'au moins un répéteur RFID (54), dans lequel la station de lecture (10) est constituée d'un couloir (12) délimité par une surface de sol, au moins deux parois longitudinales latérales et facultativement une surface de plafond, et d'au moins un appareil de lecture (14) qui est disposé dans ou sur le couloir (12) et qui génère un champ magnétique de lecture à l'intérieur du couloir (12), **caractérisé en ce que** les parois longitudinales latérales (26, 27) comportent des réflecteurs de champ électromagnétique de sorte qu'une diffusion du champ de lecture électromagnétique se produit par des réflexions multiples de telle manière qu'il se produise une intensité de champ suffisante partout à l'intérieur du couloir (12) pour faire fonctionner les répéteurs RFID (54) et pour lire leurs données, et **en ce que**, le long d'un axe du couloir (12), les parois longitudinales latérales (26, 27) se coudent au moins une fois d'un angle différent de 0° dans leur étendue (50 ; 52) le long du couloir (12).

2. Système RFID selon la revendication 1, **caractérisé en ce que** les réflecteurs de champ électromagnétique sont des surfaces électriquement conductrices discontinues ou continues comprenant du métal ou du carbone ou des polymères électriquement conducteurs.

3. Système RFID selon la revendication 1 ou 2, **caractérisé en ce que** les réflecteurs de champ électromagnétique sont intégrés dans les parois (26, 27) ou sont réalisés sous la forme d'une couche appliquée séparément ou d'un film.

4. Système RFID selon l'une des revendications 1 à 3, **caractérisé en ce que** les réflecteurs de champ électromagnétique sont transparents à travers une couche ou un film très mince ou discontinu et tramé.

5. Système RFID selon l'une des revendications 1 à 4, **caractérisé en ce que** les parois latérales sont coudées une fois d'un angle de 90° après une première étendue (50) le long du couloir (12) et se prolongent sous la forme d'une deuxième étendue (52) le long du couloir (12).

6. Système RFID selon la revendication 5, **caractérisé en ce que** les parois latérales (26, 27) se coudent en outre une nouvelle fois d'un angle de 90° orienté dans la direction opposée au premier coude de manière à ce qu'une troisième étendue (62) le long du couloir (12) soit orientée parallèlement au premier coude (50), mais décalée.

7. Système RFID selon l'une des revendications 1 à 6, **caractérisé en ce que** ledit au moins un appareil de lecture (14) comporte une antenne directionnelle et **en ce que** la direction de rayonnement principale de l'antenne directionnelle est orientée vers l'intérieur du couloir (12) et selon un angle s'écartant de la verticale vers un plan réflecteur des réflecteurs de champ électromagnétique.

8. Système RFID selon l'une des revendications 1 à 7, **caractérisé en ce que** ledit au moins un appareil de lecture (14) comporte un système d'antennes à plaques (31) qui est disposé sur les parois latérales (26, 27) ou est intégré dans les parois latérales (26, 27) en association avec les réflecteurs de champ.

9. Système RFID selon l'une des revendications 1 à 8, **caractérisé en ce qu'**un ou plusieurs autres appareils de lecture (16, 40) sont disposés dans l'étendue du couloir (12) et sont décalés les uns par rapport aux autres le long de l'axe du couloir (12).

10. Système RFID selon l'une des revendications 1 à 9, **caractérisé en ce qu'**au moins les parois latérales (26, 27) ou des parties des parois latérales (26, 27) du couloir (12) sont transparentes.

11. Système RFID selon l'une des revendications 1 à 10, **caractérisé en ce que** les parois latérales (26, 27) ou des parties des parois latérales (26, 27) qui sont tournées vers l'entrée et la sortie du couloir (12) sont peu transparentes.

12. Système RFID selon l'une des revendications 1 à 11, **caractérisé en ce qu'**une main courante (58) ou une barre d'espacement est disposée intérieurement le long des parois latérales (26, 27).

13. Système RFID selon l'une des revendications 1 à 12, **caractérisé en ce que** des lecteurs de badges (32, 36) et des lampes d'accès (34, 38) sont disposés à l'entrée et à la sortie du couloir (12) et **en ce que** les lecteurs de badges (32, 36) et les lampes d'accès (34, 38) sont reliés ou couplés, en association avec les appareils de lecture RFID (14, 16), à un ordinateur commun (56) dans ou sur le couloir (12).

14. Système RFID selon l'une des revendications 1 à 13, **caractérisé en ce qu'**un appareil de lecture (40), qui est combiné à un lecteur de badges (42) et qui est prévu pour associer à des utilisateurs (48) des objets (44) enlevés, est en outre disposé du côté tourné vers le magasin (18) et à l'extérieur du couloir (12), et **en ce que** ledit appareil de lecture (40) supplémentaire combiné au lecteur de badges (42) est également connecté ou couplé audit ordinateur de commande commun (56) .
